# EUROPÄISCHE PATENTSCHRIFT

(11) **EP 2 133 710 B1**
(45) Veröffentlichungstag und Bekanntmachung des Hinweises auf die Patenterteilung: **13.03.2013**
(21) Anmeldenummer: 09006688.7
(22) Anmeldetag: 18.05.2009
(51) Int. Cl.: G01S 13/78, G01S 7/40

(54) **Verfahren zum Testen eines Transponders für den Flugfunk und Messsystem**
Method for testing a transponder for aircraft radio and measuring system
Procédé de test d'un transpondeur pour service de radionavigation aérienne et système de mesure

(30) Priorität: 13.06.2008 DE 102008028261; 23.12.2008 DE 102008062930
(43) Veröffentlichungstag der Anmeldung: 16.12.2009
(73) Patentinhaber: Rohde & Schwarz GmbH & Co. KG, 81671 München (DE)
(72) Erfinder: Ostermeier, Jürgen, 82291 Mammendorf (DE)
(74) Vertreter: Beder, Jens

(56) Entgegenhaltungen:
- JP-A- 2008 298 597
- US-A- 4 590 477
- "Maintenance of Distance Measuring Equipment (DME) Facilities, 6730.2 CHG 15" 20. Juli 2005 (2005-07-20), U. S. Department of Transportation - Federal Aviation Administration , XP002534468 * Seiten 74-29 - Seiten 74-37; Abbildungen 5-9 *
- "Wallops Flight Facility Range User's Handbook; 840-HDBK-0001I" 17. März 2008 (2008-03-17), Goddard Space Flight Center Wallops Flight Facility , XP007909007 * Seiten 32,33; Abbildungen 3-17 *
- "Application Note, Instrument Landing System (ILS) and Distance Measuring (DME) Ground Receiver and Monitor Alarm Testing; Part. no. 46891/901" 14. November 2001 (2001-11-14), IFR , XP007909009 * das ganze Dokument *

## Beschreibung

Die Erfindung betrifft ein Verfahren zum Testen eines Transponders zum Empfangen und Senden von Signalen im Flugfunk insbesondere zur Bestimmung der Schrägentfernung eines Flugzeuges von einer Bodenstation gemäß z. B. einem DME (Distance Measurement Equipment) oder TACAN (Tactical Air Navigation) System, sowie ein entsprechendes Messsystem.

Im internationalen Flugverkehr werden nach wie vor analoge Navigationshilfen wie VOR (VHF Omnidirectional Radio Range), ILS (Instrument Landing System), MKR BCN (Marker Beacon) sowie DME bzw. TACAN eingesetzt. DME ist ein Radarsystem, mit dem die Schrägentfernung eines Flugzeuges, das als DME Interrogator arbeitet, zu einer Bodenstation, dem DME Transponder, bestimmt werden kann. Dazu werden Hochfrequenz-Doppelpulse als Anfrage-Signal vom Flugzeug zur Bodenstation gesendet und ein Antwort-Signal wird von dieser nach einer definierten Verzögerung, die als Reply Delay bezeichnet wird, wieder zurückgesendet. Aus dem Zeitabstand zwischen dem Senden des Anfrage- und Empfangen des Antwortsignals kann der Empfänger im Flugzeug die Entfernung zur Bodenstation bestimmen.

Das Verfahren ist in den Normen "Annex 10 to the Convention on International Civil Aviation, Aeronautical Telecommunications" sowie EUROCAE (European Organisation for Civil Aviation Electronics) ED-57 und EUROCAE ED-54 definiert. TACAN ist die militärische Version von DME. Das Verfahren zur Abstandsmessung ist identisch zu DME, jedoch werden von einer TACAN Bodenstation noch zusätzliche Pulse für die azimuthale Richtungsbestimmung gesendet.

Um das standardgemäße Arbeiten des DME Transponders zu gewährleisten, werden die wichtigsten Signal- bzw. hier Pulsparameter einer Bodenstation, wie z.B. Anstiegs- und Abfallszeit, Pulsbreite und -abstand sowie Pulsverzögerung (Reply Delay) und Pulsspitzenleistung im Betrieb durch eine eingebaute Testvorrichtung, dem BITE (Built in Test Equipment) oder mit Hilfe von Monitorausgängen überwacht und nachgeregelt. Dabei werden Testpulse von einem internen Interrogator erzeugt und in den Transponder-Empfänger eingespeist. Dort werden dann diese Pulse genauso verarbeitet wie Pulsanfragen von Flugzeugen. Kommt es zu einer Fehlfunktion an dieser internen Testvorrichtung, kann dies zu einer unbemerkten Fehlfunktion der Anlage führen. Zur Erläuterung wird nachfolgend auf das Beispiel eines DME-Systems Bezug genommen. Es ist jedoch ebenso für ähnlich arbeitende Systeme anwendbar, die z. B. keine Pulspaare als Anfrage- oder Antwort-Signal verwenden.

Externe Messverfahren, die sich nicht auf die interne Messvorrichtung stützen, sind ebenfalls bekannt. So wird in WO 2008/065328 A2 ein Verfahren und eine Vorrichtung zur Messung der Antworteffizienz des DME-Transponders beschrieben, um den Einfluss von Störfeldern auf einen DME-Transponder zu bestimmen. Hierbei wird ein Hochfrequenz-Empfänger in der Nähe des DME-Transponders aufgestellt, der eingehende Anfragepulse sowie die abgehenden Antwortpulse des DME-Transponders abhört. Ein angeschlossener Datenprozessor verarbeitet die gemessenen Signale und berechnet daraus die Antworteffizienz. Dieses Messverfahren lässt die vom Transponder empfangenen Anfrage- und gesendeten Antwort-Signale unverändert, sodass die Messungen bei laufendem Betrieb durchgeführt werden können. Nachteilig wirkt sich jedoch das Verwenden eines separaten Empfängers mit räumlichem Abstand zum Transponder aus. Am Messempfänger selbst sowie zwischen Messempfänger und Transponder können unterschiedliche Funkverhältnisse vorherrschen, die zusätzlich zeitlich veränderlich sind. Dadurch ist die Bestimmung der Ankunftszeit des Anfragepulses am Transponder mit einer Ungenauigkeit behaftet und die Zuordnung von Anfrage- zu Antwortpuls wird erschwert.

US 4 590 477 beschreibt ein Selbsttest-System für einen TACAN Transponder. Hierbei wird der Transponder in einen speziellen Meßmodus geschaltet. Ein Einzelpuls wird über einen Zirkulator zu dem Meßequipment geleitet, darauf mißt das Meßequipment die Pulsverzögerung.

Das Dokument "Maintenance of Distance Measuring Equipment (DME) Facilities, 6730.2 CHG 15", von U. S. Department of Transportation - Federal Aviation Administration beschreibt auf S. 74-31 den Meßaufbau zur Bestimmung der Peak Power.

Ein ähnlicher Meßaufbau wird auch in "Wallops Flight Facility Range User's Handbook; 840-HDBK-0001I" von der Goddard Space Flight Center Wallops Flight Facility gezeigt.

Die Aufgabe der vorliegenden Erfindung ist es deshalb, ein verbessertes Testverfahren und ein Testsystem für einen Transponder zu beschreiben, bei dem die Messung der wichtigsten Parameter eines Transponders durch externe Messkomponenten und unabhängig von äußeren Funkverhältnissen möglich ist.

Die Aufgabe wird durch das erfindungsgemäße Verfahren gemäß Anspruch 1 und das erfindungsgemäße Testsystem nach Anspruch 10 gelöst.

So werden in dem erfindungsgemäßen Verfahren zur Analyse eines Transponders zum Empfangen und Senden von Signalen im Flugfunk mit einer daran angeschlossenen Antenne, ein oder mehrere Anfrage-Signale von einem Signalgenerator erzeugt und mittels einer ersten Koppeleinrichtung in den Transponder-Antennen-Signalweg in Richtung eines Transponder-Eingangs eingekoppelt. Dies hat den Vorteil, dass Anfrage-Signale einer genau bekannten Form und zu einer exakt bestimmbaren Zeit dem Transponder zugeführt werden. Eine zeitliche Verzögerung durch die verwendeten Kabel und Koppeleinrichtungen kann genau bestimmt und bei der Auswertung berücksichtigt werden. Störungen der Leistungspegel der empfangenen Anfragepulse durch zeitlich variierende Funkfelder treten nicht auf.

Im nächsten Schritt wird das von der Antenne reflektierte Antwort-Signal aus dem Transponder-Antennen-Signalweg durch eine zweite Koppeleinrichtung ausgekoppelt. Dabei werden die gleichen Kabellaufzeiten wie im regulären Betrieb berücksichtigt. Bei zu geringem Reflexionsfaktor der Antenne wird das vom Transponder gesendeten Antwort-Signals direkt auf dem Signalweg zur Antenne durch die zweite Koppeleinrichtung ausgekoppelt. Diese Auskoppelvariante ermöglicht die Messung der Transponder-Signale auch bei sehr guter Antennenanpassung. Beim Aufbau des Testsystems wird die jeweilige Variante durch "Umdrehen" der zweiten Koppeleinrichtung berücksichtigt, wie es nachfolgend bei der Beschreibung der Ausführungsbeispiele noch erläutert wird.

Die Signalleistung des ausgekoppelten Antwort-Signals wird nun durch eine Leistungsmesseinrichtung gemessen. Der Signalgenerator wertet die gemessene Signalleistung aus. Aus der Signalleistung wird insbesondere eine Zeit bestimmt, die zwischen dem Anfragesignal und dem Antwortsignal liegt.

Das erfindungsgemäße Testsystem umfasst einen Signalgenerator zum Erzeugen von Anfrage-Signalen sowie zum Empfangen und Verarbeiten von Informationen der Antwort-Signale, eine erste und eine zweite Koppeleinrichtung, die im Signalweg zwischen Transponder und Antenne eingebunden sind, wobei ein Anschluss der ersten Kopplereinrichtung mit dem Signalgeneratorausgang und ein Anschluss der zweiten Koppeleinrichtung mit dem Eingang einer Leistungsmesseinrichtung zum Messen von Antwort-Signalen verbunden sind. Das erfindungsgemäße System verwendet externe Messelemente und ist damit vom internen Zustand des Transponders unabhängig. Eine Funktionsstörung des Transponders hat keine Auswirkungen auf das erfindungsgemäße Messequipment und liefert von der internen Messung mittels BITE unabhängig Transponder-Kenngrößen. Dennoch könnte im laufenden Betrieb eine Messung durchgeführt werden.

In den Unteransprüchen sind vorteilhafte Weiterbildungen des erfindungsgemäßen Verfahrens und der erfindungsgemäßen Vorrichtung dargestellt.

So werden vorzugsweise nur diejenigen Antwort-Signale im Signalgenerator ausgewertet, die in einem hinsichtlich der Dauer festgelegten Zeitfenster eintreffen, dessen zeitliche Lage durch eine systembestimmte Verzögerungszeit des Antwort-Signals ab Erzeugen und Senden des Anfrage-Signals durch den Signalgenerator festgelegt ist. Dadurch wird in vorteilhafter Weise sichergestellt, dass es sich bei den gemessenen Signalen tatsächlich um Antwort-Signale zu den gesendeten Anfrage-Signalen handelt. Dadurch werden sehr genaue und aussagekräftige Messergebnisse erzielt.

Die Lage und/oder die Länge des Zeitfensters kann auch automatisch ermittelt werden. Hierzu kann eine Verteilung einer zeitlichen Lage einer bestimmten Anzahl von Antwortsignalen verwendet werden. Aus der Häufigkeitsverteilung kann dann ein Maximum bestimmt werden, dessen zeitliche Lage die Mitte des Zeitfensters bildet. Die Breite des Zeitfensters kann z.B. so bestimmt werden, dass ein gewisser Prozentsatz der Antwortpulse (z.B. 95%) innerhalb des Zeitfensters liegt. Die Ergebnisse eines Zyklusses können beispielsweise mittels eines Histogramms, das die Häufigkeiten der Verzögerungen zeigt, ausgewertet werden.

Des Weiteren ist die Anzahl der Messungen für eine Messsequenz einstellbar. Da der zu testende Transponder in regelmäßigen Intervallen Signale mit einem Identifikationsmuster sendet oder bei geringer Anfragelast in unregelmäßigen Zeitabständen Füll-Signale gesendet werden, ist es vorteilhaft, die Anzahl der Messungen, d.h. der zu sendenden Anfrage-Signale, auf einen Wert einzustellen, der einerseits hoch genug ist, um eine gute statistische Aussage zu erzielen und der andererseits so niedrig ist, dass keine oder nur wenige Identifikations- und Füll-Signale die Messung verfälschen. Außerdem kann damit auch die Messdauer eingestellt werden.

Vorteilhafterweise werden vor einer Messsequenz die internen Laufzeiten und Verzögerungen durch den Signalgenerator, die Kabel, die erste und zweite Koppeleinrichtung sowie die Leistungsmesseinrichtung oder Teile hiervon ermittelt und bei der Berechnung der Signalparameter, insbesondere der Antwortverzögerung (Reply Delay) des Transponders, berücksichtigt. Es wird ebenfalls die erste Dämpfung durch das Dämpfungselement und das erste Koppelelement in der Leistungsmesseinrichtung gemessen und bei der Berechnung der Signalparameter insbesondere der Transponderempfindlichkeit berücksichtigt, genauso wie eine zweite Dämpfung des ersten und zweiten Koppelelements sowie der Antennenreflektionsfaktor, die bei der Berechnung der Peakleistung berücksichtigt werden. Dadurch können Einflüsse der Messvorrichtung auf das Signal bei der Auswertung berücksichtigt werden, sodass die ermittelten Parameter ausschließlich vom Transponder bestimmt sind.

Ein Dämpfungsglied ist zwischen Signalgenerator und erster Koppeleinrichtung zum Dämpfen der Antwort-Signale, die vom der ersten Koppeleinrichtung in Richtung zum Signalgeneratorausgang aus dem Transponder-Antenne-Signalweg ausgekoppelt werden, vorgesehen. Dadurch wird der Signalgeneratoreingang vor ausgekoppelten Antwort-Signalen hoher Leistung geschützt. Dies ermöglicht die Vermessung des Transponders auch im Streckennavigations-Modus, bei dem Antwort-Signale z.B. mit 1kW Leistung erzeugt werden. Bei guter Antennenpassung, wenn die zweite Koppeleinrichtung so angeordnet ist, dass sie nicht das reflektierte Signal, sondern das vom Transponder ausgegebene Antwortsignal auskoppelt, ist vorzugsweise auch zwischen der zweiten Koppeleinrichtung und dem Testgerät ein Dämpfungsglied angeordnet. Unter Dämpfungsglied wird nachfolgend auch ein Isolator verstanden, der z.B. in Vorwärtsrichtung einen Dämpfungsfaktor aufweist, der ein Vielfaches des Dämpfungsfaktors in Rückwärtsrichtung ist.

Ein bevorzugtes Ausführungsbeispiel des erfindungsgemäßen Verfahrens und der erfindungsgemäßen Vorrichtung ist in der Zeichnung dargestellt und wird in der nachfolgenden Beschreibung näher erläutert. Es zeigen:
- Fig.1a, b: den Aufbau des erfindungsgemäßen Messsystems in zwei Varianten;
- Fig.2: ein Ablaufdiagramm des erfindungsgemäßen Verfahrens;
- Fig.3: die Lage und Dauer des eingestellten Zeitfensters für das erfindungsgemäße Messverfahren;
- Fig.4: einen Messaufbau zur Ermittlung der Laufzeiten und Verzögerungen durch das Messsystem;
- Fig.5: einen Messaufbau zur Ermittlung der Dämpfung der ersten Koppeleinrichtung zur Korrektur der Empfindlichkeitsmessung; und
- Fig.6a, b: zwei Varianten des Messaufbaus zur Ermittlung der Dämpfung der Koppeleinrichtungen sowie des Antennen-Reflektionsfaktors zur Korrektur der Sender-Spitzenleistung (Peak Leistung) des Transponders.

Einander entsprechende Teile sind in allen Figuren mit gleichen Bezugszeichen versehen.

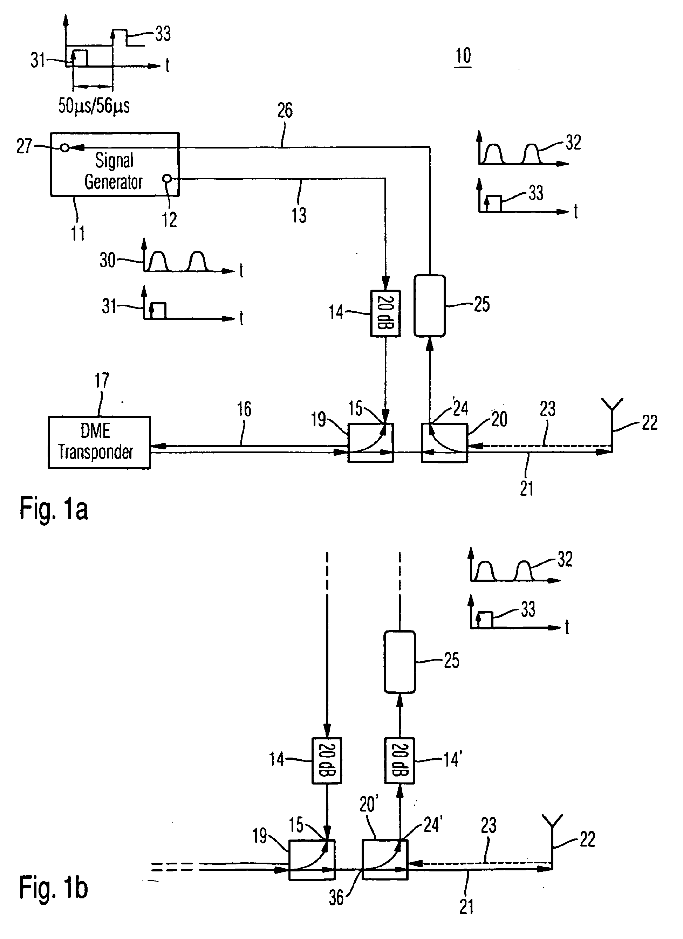

In Fig.1a ist das erfindungsgemäße Messsystem 10 für einen DME-Transponder dargestellt. Die Messung der DME-Transponder-Parameter ist damit sowohl im regulären Betrieb der Anlage als auch offline möglich. Ein Signalgenerator 11 erzeugt ein Anfrage-Signal 30, das über ein Kabel 13, ein Dämpfungselement 14, einen ersten Anschluss 15 der ersten Koppeleinrichtung 19 in eine Verbindung 16 des Transponder-Antenne-Signalwegs zum DME-Transponder 17 eingekoppelt wird. Das Dämpfungsglied 14 schützt hierbei den Signalgeneratorausgang 12 vor einem ausgekoppelten Teil des durch die erste Koppeleinrichtung 19 in Gegenrichtung laufenden, bis zu 1 kW Pulsleistung starken Antwort-Signals des DME-Transponders 17. Die erste Koppeleinrichtung 19 kann auch direkt im DME-Transponder integriert sein.

Das in Reaktion auf ein empfangenes Anfrage-Signal erzeugte Antwort-Signal wird über die Verbindung 16, die erste Koppeleinrichtung 19, eine weitere im Transponder-Antennen-Signalweg angeordnete Koppeleinrichtung 20 und eine weitere Verbindung 21 des Transponder-Antenne-Signalwegs in die Antenne 22 eingespeist. Auch die weitere Koppeleinrichtung 20 kann in dem Transponder 17 integriert sein. Ein Bruchteil des Antwort-Signals 23 wird an der Antenne 22 abhängig von der Qualität der Anpassung der Antenne 22 reflektiert und über einen ersten Anschluss 24 der zweiten Koppeleinrichtung 20 aus dem Antenne-Transponder-Signalweg (16, 21, 23) zu einer Leistungsmesseinrichtung 25 ausgekoppelt. Die zweite Koppeleinrichtung 20 kann dabei auch zusammen mit der ersten Koppeleinrichtung 19 als ein zweifacher Richtkoppler ausgebildet und ebenfalls in den Transponder integriert sein. Das Signal erfährt bei einer Auskopplung z. B. eine Koppeldämpfung von typischerweise 20dB.

Bei einer sehr guten Antennenanpassung ist das von der Antenne 22 reflektierte Signal so schwach, dass es nicht für eine Auswertung verwendet werden kann. In diesem Fall wird das von dem Transponder 17 ausgegebene Antwort-Signal auf dem Signalweg vom Transponder 17 zur Antenne 22 durch die erste Koppeleinrichtung 19 über einen zweiten Anschluss 36 der zweiten Koppeleinrichtung 20' und dessen ersten Anschluss 24' direkt zum Leistungssensor 25 ausgekoppelt und dort analysiert. Dies ist in Fig. 1b dargestellt. Es ist zu erkennen, dass die zweite Koppeleinrichtung 20' in diesem Fall umgedreht angeordnet ist. Ferner ist zwischen dem ersten Anschluss 24' der zweiten Koppeleinrichtung 20' und der Leistungsmesseinrichtung 25 ein weiteres Dämpfungsglied 14' vorgesehen, um auch stärkere Signale messen zu können. Die Leistungsmesseinrichtung 25 ist in dem dargestellten Ausführungsbeispiel als externer Leistungssensor 25 ausgeführt und über ein Kabel 26 mit einem Eingang 27 des Signalgenerators 11 verbunden. Ein vom Leistungssensor 25 beim Eintreffen eines Antwort-Signals 32 gesendetes Triggersignal 33 wird zusätzlich zu den Messwerten der gemessenen Signalleistung des reflektierten Teils des Antwort-Signals über eine Leitung 26 an den Signalgenerator 11 übertragen und dort ausgewertet.

Das Erzeugen eines Triggersignals durch den Leistungssensor 25 erfolgt, sobald die gemessene Leistung einen am Leistungssensor 25 einstellbaren Schwellenwert überschreitet.

Zur Bestimmung der Signalverzögerungszeit zwischen Anfrage-Signal und Antwort-Signal wird die Zeit zwischen einem Startsignal 31 und dem vom Leistungssensor 25 empfangenen Antwort Triggersignal 33 ermittelt. Das Startsignal 31 wird in dem Signalgenerator 11 z. B. beim Überschreiten einer ebenfalls einstellbaren Schwelle, z. B. 50% des Maximalwerts (der Spitzenspannung) des Anfragesignals, durch das Anfragesignal 30 erzeugt.

Ein Vorteil der Anordnung nach Fig. 1a liegt darin, dass die Laufzeit des Anfrage-Signals 30 und des Antwort-Signals 32 zwischen Antenne 22 und Transponder 17 in beiden Richtungen richtig berücksichtigt wird. Die Laufzeit geht über den gesamten Transponder-Antenne-Signalweg, wie beim regulären Betrieb der Anlage, zweimal in die Verzögerungszeit ein. Einmal für die Laufzeit des Empfangssignals von der Antenne 22 zum Transponder 17 und einmal für die Laufzeit des gesendeten Signals vom Transponder 17 zur Antenne 22. Bei einem 10m langen Kabel beträgt diese Laufzeit etwa 100ns. Bei dem Ausführungsbeispiel nach Fig. 1b wird die Leitungslänge zur Antenne 22 dagegen rechnerisch berücksichtigt. Bei beiden Varianten ist die am Transpondereingang ankommende Signalform und -leistung sehr genau bekannt. Es ist daher eine genaue Bestimmung der Empfindlichkeitsschwelle des Transponders 17 möglich.

Mit dem erfindungsgemäßen Messsystem können unter anderem folgende Parameter gemessen werden:
- Maximale Pulsleistung bzw. allgemein maximale Signalleistung des Antwort-Signals
- Signalform (z.B. Anstiegs- Abfallszeit, Pulsweite und Pulsabstand)
- Verzögerungszeit innerhalb des DME Transponders (Reply Delay)
- Antworteffizienz (Verhältnis von Antwort- zu Anfrage-Signalen, Reply Efficiency), und
- Signalrate des Transponders

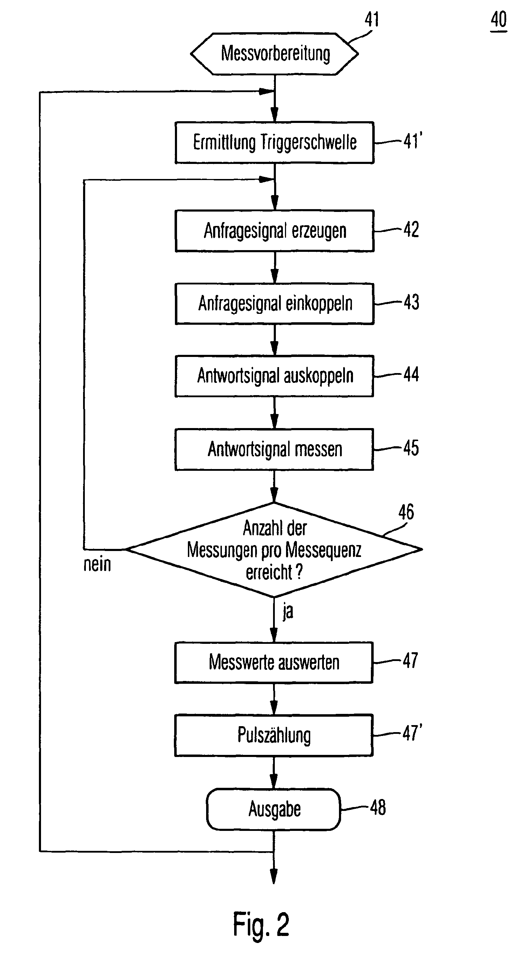

In Fig. 2 ist der Messablauf 40 mit den einzelnen Schritten aufgezeigt. In der Messvorbereitung 41 wird zunächst eine Normalisierung und Initialisierung durchgeführt. Dabei werden Messungen zur Ermittlung der Laufzeiten und Verzögerungen durch die Messkomponenten, der Dämpfung der Koppeleinrichtungen 19, 20, 20' und des Reflektionsfaktors der Antenne 22 durchgeführt, um die Effekte der Messkomponenten bei der Auswertung der Messergebnisse herausrechnen zu können. Wird das Zeitfenster manuell eingestellt, so wird dies ebenfalls bei der Messvorbereitung durchgeführt. Gleichzeitig wird in Schritt 41 die Anzahl der Messungen pro Messsequenz festgelegt.

Zur Einstellung der Triggerschwelle im nachfolgenden Schritt 41' wird der Signalgenerator 11 und der Leistungssensor 25 in einen definierten Zustand gebracht, die DME Modulation gestartet und zunächst nur der Spitzenpulspegel der gesendeten Pulse mit dem Leistungssensor 25 gemessen. In einem DME-System werden als Anfrage-Signal und als Antwort-Signal Doppelpulse gesendet. Daher wird nachfolgend für die Signale synonym der Begriff Pulse verwendet. Der gemessene Pegel wird auf ein zulässiges Pegelfenster im Bereich von -13 dBm bis +20 dBm überprüft und gegebenenfalls eine Fehlermeldung ausgegeben. Danach wird der Leistungssensor 25 in einen speziellen Triggermodus gebracht und die Triggerschwelle eingestellt, z. B. auf 50% der zuvor gemessenen Pulsspannung. In diesem Mode liefert der Leistungssensor 25 in Echtzeit Triggerpulse zu dem Zeitpunkt, zu dem die gemessene Pulsspannung die eingestellte Triggerschwelle überschreitet. Somit wird die Triggerung immer in demselben Zeitpunkt eines Doppelpulses vorgenommen.

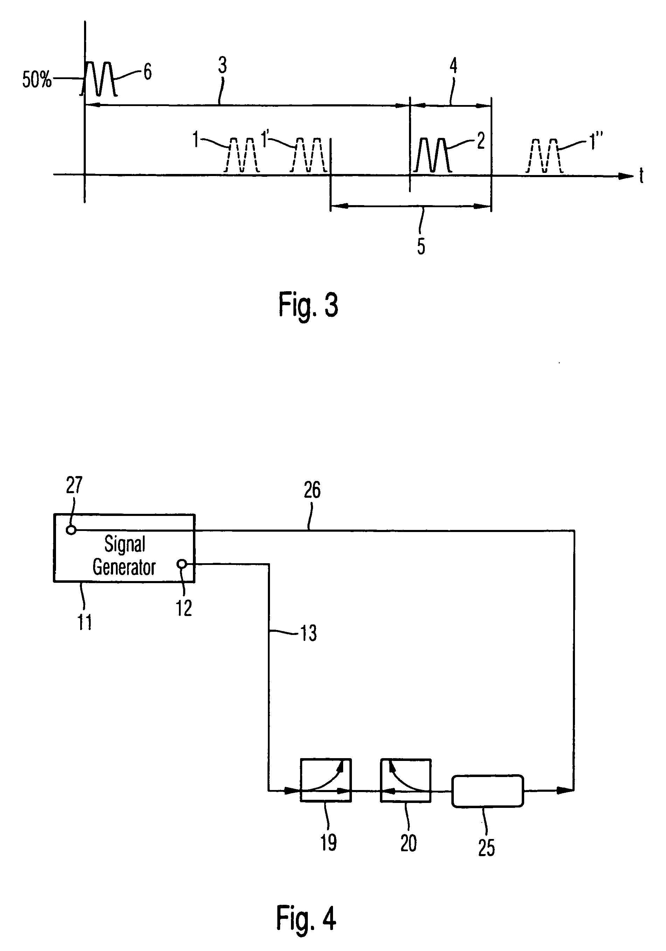

Um aus der Vielzahl der empfangenen Pulse, wie Füllpulsen, Identifikationspulsen und Antwortpulsen auf Anfragen anderer Flugzeuge, die richtigen Antwortpulse 2, d. h. den in Reaktion auf einen bestimmten Anfragepuls 6 gesendeten Antwortpulse 2, herauszufiltern, wird ein Zeitfenster 5 wie in Fig. 3 dargestellt, definiert, innerhalb dessen ein gültiger Antwortpuls 2 am Leistungssensor 25 eintreffen muss. Antwortpulse 2, die innerhalb eines Intervalls 4 vor und nach der erwarteten Verzögerungszeit 3 ab dem Erzeugen des Anfragepulses im Signalgenerator 11 eingehen, werden ausgewertet. Der Zeitpunkt des Erzeugens des Anfragepulses ist gegeben, wenn der Anfragepuls das erste Mal 50% der maximalen Spannung erreicht. Antwortpulse 1, 1', 1" die außerhalb dieses Zeitfensters 5 am Signalgenerator 11 registriert werden, werden für die Bestimmung der Verzögerungszeit verworfen.

Sind diese Vorbereitungen getroffen, erzeugt im Schritt 42 der Signalgenerator 11 ein Anfrage-Signal 30, gibt dieses am Ausgang 12 des Signalgenerators 11 aus und simuliert so das Anfrage-Signal 30 eines realen Flugzeuges. Parallel dazu wird ein internes Signal 31 erzeugt, das eine Laufzeitmessung startet. Im nächsten Schritt 43 wird das Anfrage-Signal 30 in den Transponder-Antenne-Signalweg eingekoppelt und vom Empfangsteil des DME-Transponders 17 empfangen. Nach der im Transponder 17 eingestellten Verzögerungszeit sendet der DME-Transponder 17 das Antwort-Signal 32 zur Antenne 22. Ein Teil der Leistung bei der in Fig. 1a dargestellten Variante wird auf Grund der nicht idealen Anpassung der Antenne 22 reflektiert und im Schritt 44 aus dem Transponder-Antenne-Signalweg ausgekoppelt. Der Leistungssensor 25 empfängt und detektiert im Verfahrensschritt 45 das Antwort-Signal 32. Ein Triggerpuls 33 wird bei Erreichen des Schwellwerts von beispielsweise 50% der maximalen Signalspannung auf der steigenden Pulsflanke des Antwort-Signals 32 erzeugt und vorzugsweise über eine eigene Triggerleitung 26 dem Signalgenerator 11 zugeführt. Der Signalgenerator 11 stoppt daraufhin den Zähler für die Laufzeitmessung.

Der Leistungssensor 25 ermittelt außerdem diskrete Leistungsmesswerte und sendet diese Daten z. B. per USB an den Signalgenerator 11, der hieraus Pulsparameter, wie Peakleistung und Pulsform ermittelt. Der Signalgenerator 11 überprüft in Schritt 46 auch die Anzahl der durchgeführten Messungen, also die Anzahl der erzeugten und ausgegebenen Anfrage-Signale, und durchläuft die Schritte 42 bis 45 nochmals, wenn die für die Messsequenz eingestellte Anzahl der Messungen noch nicht erreicht ist. Ist die maximale Anzahl der Messungen der Messsequenz erreicht, wertet in Schritt 47 der Signalgenerator 11 die Messungen aus und ermittelt insbesondere die eingestellte Verzögerungszeit des Transponders 17. Bei einer automatischen Ermittlung des Zeitfensters kann diese nun ebenfalls durchgeführt werden. Danach erfolgt noch eine Auswertung der Anzahlen gültiger und ungültiger Pulse, um wie nachfolgend beschrieben die sog. Efficiency bestimmen zu können. Mit Schritt 48 wird die Messsequenz mit Ausgabe der Ergebnisse abgeschlossen. Die Ergebnisse werden nun zur Anzeige im Display des Signalgenerators 11 oder eines externen Geräts bereitgestellt. Anschließend kann eine Messsequenz gestartet werden.

Für die Messung der Antwortverzögerung (Reply Delay) werden nur gültige Antwort-Pulse 2 verwendet, die also innerhalb des Zeitfensters 5 liegen, und es wird über die Anzahl der gültigen Messungen gemittelt. Für die Berechnung der Antworteffizienz(Reply Efficiency) wird das Verhältnis aus Anzahl der gültigen Antwort-Pulse 2 zur Anzahl der eingespeisten Anfrage-Pulse 30 einmal pro Messsequenz berechnet.

Nach der Durchführung der Auswertung wird der Zähler im Signalgenerator 11 umkonfiguriert und als Pulszähler verwendet, der alle Triggerpulse des Leistungssensors 25 innerhalb einer bestimmbaren Zeitspanne zählt. Damit werden in Schritt 47' alle Sendepulse des Transponders 17 erfasst und es wird die Pulsrate des DME-Transponders 17 ermittelt. Die Messung der Pulsrate kann bei Bedarf abgeschaltet werden, um die Zeitdauer für eine Messsequenz zu verkürzen.

Fig. 4 zeigt den Messaufbau zur Ermittlung der Laufzeiten und Verzögerungen durch die Messkomponenten. Hierfür ist der Ausgang 12 des Signalgenerators 11 über das Kabel 13 mit der ersten und der zweiten Koppeleinrichtung 19, 20 verbunden. Das Signal wird vom Leistungssensor 25 detektiert und über die Verbindung 26 dem Eingang 27 des Signalgenerators 11 zugeführt. Ein Zähler für die Laufzeitmessung wird beim Aussenden des Signals im Signalgenerator 11 durch das Startsignal 31 gestartet und beim Eintreffen des Triggersignals 33 vom Leistungssensor 25 gestoppt.

Bei dieser Messung werden die Korrekturwerte für die
- Verzögerung zwischen dem Erreichen der 50% Signalamplitude des Anfragepulses 30 und Start der Laufzeitmessung 31,
- Signallaufzeit in Kabel 13 und Dämpfungseinrichtung 14 für den Anfragepuls 30 vom Signalgenerator 11 zur Koppeleinrichtung 19, 20,
- Signallaufzeit durch die Koppeleinrichtung 19, 20,
- Verzögerung zwischen dem Erreichen des Schwellwerts des empfangenen Signals 32 im Leistungssensor 25 und dem Aussenden des Triggersignals 33,
- Laufzeit des Triggersignals 33 zwischen Leistungssensor 25 und Signalgenerator 11 sowie
- Verzögerungszeiten im Signalgenerator 11 zwischen dem Empfang des Triggersignals und dem Stoppsignal für den Zähler der Laufzeitmessung
ermittelt.

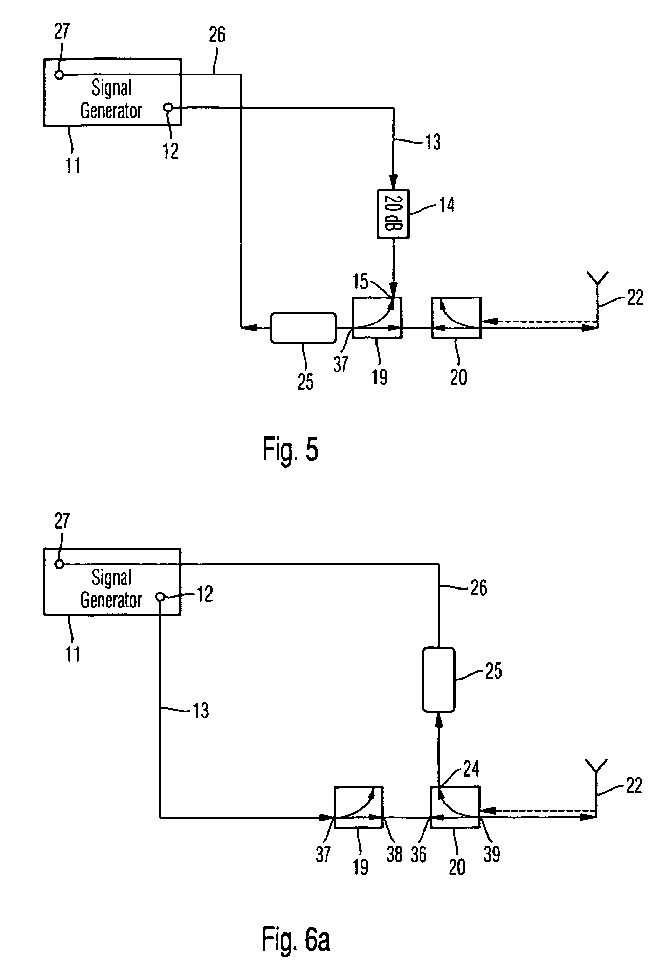

Die Dämpfung der Messanordnung für die Empfänger-Empfindlichkeitsmessung des Transponders 17 kann mit dem in Fig. 5 dargestellten Messaufbau richtig berücksichtigt werden. Dazu wird ein Signal vom Ausgang 12 des Signalgenerators 11 über das Kabel 13 und das Dämpfungselement 14 zum ersten Anschluss 15 der ersten Koppeleinrichtung eingespeist einem zweiten Anschluss 37 der ersten Koppeleinrichtung 19 zum Leistungssensor 25 geführt und dort gemessen. Über die Leitung 26 werden die Messwerte dem Eingang 27 des Signalgenerators 11 zugeführt und dort ausgewertet. Für höhere Pegel als -20 dBm wird als Dämpfungselement 14 ein Isolator verwendet. Dieser hat z. B. eine Dämpfung in Durchlassrichtung von 1 dB (Signalrichtung des Anfragepulses) und von 20 dB in Sperrrichtung.

Durch ein vorzugsweise 20dB starkes Dämpfungselement 14 können Pegelfehler, die durch nicht optimale Anpassung zwischen Signalgenerator 11 und dem Empfänger des DME-Transponders verursacht werden, weitgehend vernachlässigt werden. Durch diese Korrektur können Pegel z.B. im Bereich von -160 dBm bis -20 dBm getestet werden. Die Messung der Eingangsempfindlichkeit ist damit über ein sehr großes Pegelfenster und mit hoher Genauigkeit möglich.

Mit dem in Fig. 6a dargestellten Messaufbau wird die Summe der Dämpfungen der ersten und zweiten Koppeleinrichtung 19, 20 und der Reflektionsfaktor der Antenne 22 gemessen. Dazu wird ein Signal vom Ausgang 12 des

Signalgenerators 11 über die Verbindung 13 zum zweiten Anschluss 37 der ersten Koppeleinrichtung 19 geführt. Über einen dritten Anschluss 38 der ersten Koppeleinrichtung 19 läuft das Signal weiter durch den zweiten und dritten Anschluss 36, 39 der zweiten Koppeleinrichtung 20 zur Antenne 22. Ein Teil des Signals wird reflektiert und über den dritten Anschluss 39 der zweiten Koppeleinrichtung 20 zum ersten Anschluss 24 ausgekoppelt und im daran angeschlossenen Leistungssensor 25 gemessen. Ist die erste und zweite Koppeleinrichtung 19, 20 durch einen zweifachen Richtkoppler realisiert, so entfallen die Strecken zwischen den Anschlüssen 38 und 36. Die so ermittelten Korrekturwerte werden bei der Bestimmung der Spitzenleistung des DME-Transponders berücksichtigt, sodass die Leistung des Transpondersenders sehr genau bestimmt werden kann.

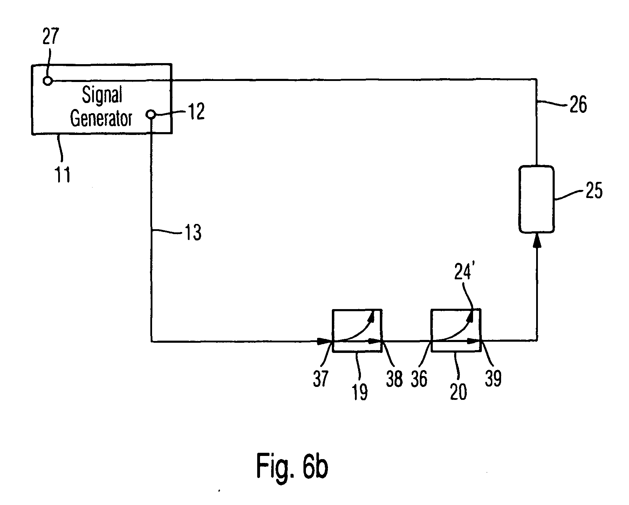

Die Anordnung für eine gute Antennenanpassung ist in Fig. 6b gezeigt. Es ist wiederum die zweite Koppeleinrichtung 20 umgedreht angeordnet. Dadurch wird das vom Transponder 17 in Richtung zur Antenne 22 übertragene Signal direkt gemessen. Der Leistungssensor 25 ist hierzu mit dem dritten Anschluss 39' verbunden. Dem Leistungssensor 25 kann wiederum ein (hier nicht dargestelltes) Dämpfungsglied zur Messung hoher Leistungen vorgeschaltet sein. Zudem wird eine Messung durchgeführt, bei der der Leistungssensor 25 mit dem ersten Anschluss 24' der zweiten Koppeleinrichtung über ein Dämpfungsglied 14' (wie in Fig. 1b) angeordnet) verbunden ist. Die Antenne 22 ist dabei am Anschluss 39 angeschlossen. Die Differenz zwischen diesen beiden Messungen ergibt einen Korrekturfaktor.

Alle beschriebenen und/oder gezeichneten Merkmale können im Rahmen der Erfindung auch einzeln vorteilhaft miteinander kombiniert werden. Die Erfindung ist nicht auf die Ausführungsbeispiele beschränkt.

## Patentansprüche

1. Verfahren zum Testen eines DME oder TACAN Transponders (17) zum Empfangen und Senden von Signalen im Flugfunk mit einer daran angeschlossenen Antenne (22), mit folgenden Verfahrensschritten:
- Erzeugen eines Anfrage-Signals (30) durch einen Signalgenerator (11),
- Einkoppeln zumindest eines Teils des Anfrage-Signals (30) in einen Transponder-Antennen-Signalweg in Richtung Transponder-Eingang durch einen ersten Richtkoppler (19),
- Erzeugung eines Antwort-Signals (2) in Reaktion auf das empfangene Anfrage-Signal (6) durch den Transponder (17), wobei das Aufrage-Signal (6) und das Antwort-Signal (2) als Doppelpuls ausgebildet sind,
- Auskoppeln zumindest eines Teils zumindest eines von der Antenne (22) reflektierten Antwort-Signals aus dem Transponder-Antennen-Signalweg oder Auskoppeln des zumindest einen vom Transponder (17) zur Antenne (22) gesendeten Antwort-Signals durch einen zweiten Richtkoppler (20, 20'),
- Messen einer Signalleistung oder einer Signalspannung des zumindest einen ausgekoppelten Antwort-Signals durch eine Leistungsmesseinrichtung (25) sowie Weiterleiten der gemessenen Signalleistung oder -spannung oder eines daraus erzeugten Triggersignals an den Signalgenerator (11)
- Auswerten der gemessenen Signalleistung oder des Triggersignals durch den Signalgenerator (11) und Ermitteln einer Verzögerungszeit,
**dadurch gekennzeichnet,**
**dass** nur solche Antwort-Signale (2) im Signalgenerator ausgewertet werden, die in einem hinsichtlich der Dauer festgelegten Zeitfenster (5) eintreffen, dessen Lage durch eine systembestimmte Verzögerungszeit (3) des Antwort-Signals festgelegt ist, und
**dass** der erste Richtkoppler (19) einen gedämpften Teil des Anfrage-Signals in den Transponder-Antennen-Signalweg einkoppelt und der zweite Richtkoppler (20, 20')einen gedämpften Teil des Antwort-Signals aus dem Transponder-Antennen-Signalweg auskoppelt.

2. Verfahren nach Anspruch 1,
**dadurch gekennzeichnet,**
**dass** eine Lage und/oder die Dauer des Zeitfensters (5) automatisch ermittelt wird.

3. Verfahren nach Anspruch 2,
**dadurch gekennzeichnet,**
**dass** der Signalgenerator (11) eine Zeitmessung startet, sobald eine Leistung oder Spannung des Anfrage-Signals (30) einen Schwellwert überschreitet und bei Erhalt des von dem Antwort-Signal (33) ausgelösten Triggersignal der Leistungsmesseinrichtung (25) die Zeitmessung stoppt und hieraus die Verzögerungszeit ermittelt.

4. Verfahren nach einem der Ansprüche 1 bis 3
**dadurch gekennzeichnet,**
**dass** der Signalgenerator (11) alle gesendeten Anfrage-Signale (30) sowie die von der Leistungsmesseinrichtung (25) innerhalb des vorbestimmten Zeitfensters (5) empfangenen Antwort-Signale (32) jeweils zählt.

5. Verfahren nach einem der Ansprüche 1 bis 4
**dadurch gekennzeichnet,**
**dass** die Messwerte und/oder Zählerstände im Signalgenerator (11) ausgewertet und auf einem Display darstellt werden.

6. Verfahren nach einem der Ansprüche 1 bis 5
**dadurch gekennzeichnet,**
**dass** eine Anzahl von Messungen für eine Messsequenz einstellbar ist.

7. Verfahren nach Anspruch 6
**dadurch gekennzeichnet,**
**dass** vor einer Messsequenz eine maximale Pulsspitzenleistung oder eine Pulsspitzenspannung, der an der Leistungsmesseinrichtung (25) empfangenen und detektierten Signale (32), gemessen wird und eine Triggerschwelle zum Erzeugen eines Triggersignals (33) in der Leistungsmesseinrichtung (25) eingestellt wird.

8. Verfahren nach einem der Ansprüche 1 bis 7,
**dadurch gekennzeichnet,**
**dass** das von dem ersten Richtkoppler (19) in Richtung Signalgenerator (11) aus dem Transponder-Antenne-Signalweg ausgekoppelte Signal durch ein Dämpfungselement (14) abgeschwächt und an den Signalgeneratorausgang (12) weitergegeben wird.

9. Verfahren nach einem der Ansprüche 1 bis 8,
**dadurch gekennzeichnet,**
**dass** vor einer Messsequenz interne Laufzeiten durch den Signalgenerator (11), die Kabel (13, 16, 18, 26), den ersten und/oder zweiten Richtkoppler (19, 20) und/oder die Leistungsmesseinrichtung (25) ermittelt werden und bei einer Berechnung von Signalparametern berücksichtigt werden und/oder
**dass** vor einer Messsequenz eine erste Dämpfung durch das Dämpfungselement (14) und das erste Koppelelement (19) in der Leistungsmesseinrichtung (25) gemessen wird und bei der Berechnung der Signalparameter berücksichtigt wird und/oder
**dass** vor einer Messsequenz eine zweite Dämpfung des ersten und zweiten Richtkopplers (19, 20, 20') sowie der Antennenreflektionsfaktor in der Leistungsmesseinrichtung (25) gemessen werden und bei der Berechnung der Signalparameter berücksichtigt wird.

10. Testsystem zum Testen eines DME oder TACAN Transponders (17) zum Empfangen und Senden von Signalen im Flugfunk mit einer daran angeschlossenen Antenne (22), umfassend
- einen Signalgenerator (11) zum Erzeugen von Anfrage-Signalen (30) sowie zum Empfangen und Auswerten von den Antwort-Signalen, die durch den Transponder (17) in Reaktion auf das empfangene Aufrage-Signal (6) erzeugt werden, wobei das Aufrage-Signal (6) und das Antwort-Signal (2) als Doppelpuls ausgebildet sind,
- einen ersten und einen zweiten Richtkoppler (19, 20), die im Signalweg zwischen Transponder (17) und Antenne (22) angeordnet sind, wobei ein erster Anschluss (15) des ersten Richtkopplers (19) mit dem Signalgeneratorausgang (12) und ein erster Anschluss (24, 24') des zweiten Richtkopplers (20) mit einem Eingang einer Leistungsmesseinrichtung (25) zum Messen einer Signalleistung oder einer Signalspannung verbunden sind,
**dadurch gekennzeichnet,**
**dass** der Signalgenerator eingerichtet ist, nur solche Antwort-Signale (2) auszuwerten, die in einem hinsichtlich der Dauer festgelegten Zeitfenster (5) eintreffen, dessen Lage durch eine systembestimmte Verzögerungszeit (3) des Antwort-Signals festgelegt ist, und
**dass** der erste Richtkoppler (19) einen gedämpften Teil des Anfrage-Signals in den Transponder-Antennen-Signalweg einkoppelt und der zweite Richtkoppler (20, 20') einen gedämpften Teil des Antwort-Signals aus dem Transponder-Antennen-Signalweg auskoppelt.

11. Testsystem nach Anspruch 10,
**dadurch gekennzeichnet,**
**dass** ein Triggersignal (33) erzeugbar ist, sobald eine gemessene Leistung oder Spannung einen Schwellwert überschreitet.

12. Testsystem nach einem der Ansprüche 10 und 11,
**dadurch gekennzeichnet,**
**dass** die Leistungsmesseinrichtung (25) ein Leistungssensor ist, der mit dem Signalgenerator (11) verbunden ist und die gemessene Leistung und/oder Spannung eines Signals (32) an den Signalgenerator (11) weiterleitet.

13. Testsystem nach einem der Ansprüche 10 bis 12,
**dadurch gekennzeichnet,**
**dass** der Signalgenerator (11) zumindest einen ersten Zähler zum Zählen aller gesendeten Anfrage-Signale (30) sowie einen zweiten Zähler zum Zählen aller empfangenen Antwort-Signale (32) umfasst.

14. Testsystem nach Anspruch 10 bis 13,
**dadurch gekennzeichnet,**
**dass** der erste und der zweite Richtkoppler (19, 20) als ein zweifacher Richtkoppler ausgeführt sind.

15. Testsystem gemäß einem der Ansprüche 10 bis 14,
**dadurch gekennzeichnet,**
**dass** ein Dämpfungsglied (14) zwischen dem Signalgenerator (11) und dem ersten Richtkoppler (19) zum Dämpfen der Antwort-Signale, die von dem ersten Richtkoppler (19) in Rückwärtsrichtung aus dem Transponder-Antenne-Signalweg (16, 21, 23) ausgekoppelt werden, angeordnet ist.

## Claims

1. Method of testing a DME or TACAN transponder (17) for receiving and transmitting signals in aircraft radio, with an aerial (22) attached thereto, comprising the following steps:
- generating an enquiry signal (30) by means of a signal generator (11),
- coupling at least part of the enquiry signal (30) into a transponder-aerial signal path in the direction of the transponder input, by means of a first directional coupler (19),
- generating a response signal (2) in reaction to the enquiry signal (6) received by the transponder (17), the enquiry signal (6) and the response signal (2) being configured as a double pulse,
- coupling at least part of at least one response signal reflected by the aerial (22) out of the transponder-aerial signal path or coupling out the at least one response signal sent by the transponder (17) to the aerial (22) by means of a second directional coupler (20, 20'),
- measuring a signal power or a signal voltage of the at least one response signal coupled out by a power measuring device (25) and transmitting the signal power or voltage measured or a trigger signal produced therefrom to the signal generator (11),
- evaluating the signal power measured or the trigger signal by means of the signal generator (11) and determining a delay time,
**characterised in that**
in the signal generator only the response signals (2) that are received within a time window (5) of a defined duration are evaluated, the position of said window being fixed by a system-determined delay time (3) of the response signal, and
the first directional coupler (19) couples an attenuated part of the enquiry signal into the transponder-aerial signal path and the second directional coupler (20, 20') couples an attenuated part of the response signal out of the transponder-aerial signal path.

2. Method according to claim 1, **characterised in that** a position and/or the duration of the time window (5) is determined automatically.

3. Method according to claim 2, **characterised in that** the signal generator (11) starts a time measurement as soon as a power or voltage of the enquiry signal (30) exceeds a threshold value and when the trigger signal of the power measuring device (25) triggered by the response signal (33) is received it stops the time measurement and from this determines the delay time.

4. Method according to one of claims 1 to 3, **characterised in that** the signal generator (11) counts all the enquiry signals (30) transmitted and the response signals (32) received from the power measuring device (25) within the predetermined time window (5).

5. Method according to one of claims 1 to 4, **characterised in that** the measured values and/or the counter reading are evaluated in the signal generator (11) and shown on a display.

6. Method according to one of claims 1 to 5, **characterised in that** a number of measurements can be selected for a measuring sequence.

7. Method according to claim 6, **characterised in that** before a measuring sequence a maximum pulse peak power or a pulse peak voltage is measured for the signals (32) received and detected at the power measuring device (25), and a trigger threshold is selected for generating a trigger signal (33) in the power measuring device (25).

8. Method according to one of claims 1 to 7, **characterised in that** the signal coupled out from the transponder-aerial signal path by the first directional coupler (19) towards the signal generator (11) is attenuated by an attenuating element (14) and relayed to the signal generator output (12).

9. Method according to one of claims 1 to 8, **characterised in that**
before a measuring sequence internal running times through the signal generator (11), the cables (13, 16, 18, 26), the first and/or second directional coupler (19, 20) and/or the power measuring device (25) are determined and taken into consideration when signal parameters are calculated, and/or
before a measuring sequence a first attenuation by the attenuating element (14) and the first coupling element (19) is measured in the power measuring device (25) and taken into consideration when the signal parameters are calculated, and/or
before a measuring sequence a second attenuation of the first and second directional couplers (19, 20, 20') and the aerial reflection factor are measured in the power measuring device (25) and taken into consideration when the signal parameters are calculated.

10. Test system for testing a DME or TACAN transponder (17) for receiving and transmitting signals in aircraft radio with an aerial (22) attached thereto, comprising
- a signal generator (11) for generating enquiry signals (30) and for receiving and evaluating the response signals which are generated by the transponder (17) in reaction to the enquiry signal (6) received, the enquiry signal (6) and the reply signal (2) being configured as a double pulse,
- a first and a second directional coupler (19, 20) which are arranged in the signal path between the transponder (17) and the aerial (22), a first connection (15) of the first directional coupler (19) being connected to the signal generator output (12) and a first connection (24, 24') of the second directional coupler (20) being connected to an input of a power measuring device (25) for measuring a signal power or a signal voltage,
**characterised in that**
the signal generator is arranged so as to evaluate only those response signals (2) that are received within a time window of a specified duration, the position of which is fixed by a system-determined delay time (3) of the response signal, and
the first directional coupler (19) couples an attenuated part of the enquiry signal into the transponder-aerial signal path and the second directional coupler (20, 20') couples an attenuated part of the response signal out of the transponder-aerial signal path.

11. Test system according to claim 10, **characterised in that** a trigger signal (33) can be generated as soon as a measured power or voltage exceeds a threshold value.

12. Test system according to one of claims 10 and 11, **characterised in that** the power measuring device (25) is a power sensor which is connected to the signal generator (11) and transmits the measured power and/or voltage of a signal (32) to the signal generator (11).

13. Test system according to one of claims 10 to 12, **characterised in that** the signal generator (11) comprises at least a first counter for counting all the enquiry signals (30) sent, and a second counter for counting all the reply signals (32) received.

14. Test system according to claims 10 to 13, **characterised in that** the first and the second directional couplers (19, 20) are embodied as a dual directional coupler.

15. Test system according to one of claims 10 to 14, **characterised in that** an attenuating member (14) is provided between the signal generator (11) and the first directional coupler (19) for attenuating the response signals that are coupled out by the first directional coupler (19) in the backwards direction from the transponder-aerial signal path (16, 21, 23).

## Revendications

1. Procédé de test d'un transpondeur DME ou TACAN (17) pour recevoir et émettre des signaux dans un service de radionavigation aérienne avec une antenne (22) y étant raccordée, comprenant les étapes de procédé suivantes :
- production d'un signal de demande (30) par un générateur de signaux (11),
- couplage d'au moins une partie du signal de demande (30) dans un trajet de signal antenne-transpondeur dans le sens entrée du transpondeur par un premier coupleur directif (19),
- production d'un signal de réponse (2) en réaction au signal de demande (6) reçu par le transpondeur (17), le signal de demande (6) et le signal de réponse (2) étant conçus comme impulsion double,
- découplage d'au moins une partie d'au moins un signal de réponse reflété par l'antenne (22) provenant du trajet de signal antenne-transpondeur ou découplage du au moins un signal de réponse envoyé par le transpondeur (17) à l'antenne (22) par un deuxième coupleur directif (20, 20'),
- mesure d'une puissance de signal ou d'une tension de signal du au moins un signal de réponse découplé par un dispositif de mesure de puissance (25) et transmission de la puissance ou de la tension de signal mesurée ou d'un signal de déclenchement ainsi produit au générateur de signaux (11)
- évaluation de la puissance de signal mesurée ou du signal de déclenchement par le générateur de signaux (11) et détection d'un temps de retard,
**caractérisé en ce que** seuls de tels signaux de réponse (2) sont évalués dans le générateur de signaux, qui arrivent dans une fenêtre de temps (5) fixée au niveau de la durée, dont la position est fixée par un temps de retard (3), déterminé par le système, du signal de réponse, et **en ce que** le premier coupleur directif (19) couple une partie amortie du signal de demande dans le trajet de signal antenne-transpondeur et le deuxième coupleur directif (20, 20') découple une partie amortie du signal de réponse provenant du trajet de signal antenne-transpondeur.

2. Procédé selon la revendication 1, **caractérisé en ce qu'**une position et/ou la durée de la fenêtre de temps (5) est déterminée automatiquement.

3. Procédé selon la revendication 2, **caractérisé en ce que** le générateur de signaux (11) débute une mesure du temps, dès qu'une puissance ou une tension du signal de demande (30) dépasse une valeur seuil et à la réception du signal de déclenchement, déclenché par le signal de réponse (33), du dispositif de mesure de puissance (25) arrête la mesure du temps et détermine ainsi le temps de retard.

4. Procédé selon l'une des revendications 1 à 3, **caractérisé en ce que** le générateur de signaux (11) compte à chaque fois tous les signaux de demande envoyés (30) ainsi que les signaux de réponse (32) reçus du dispositif de mesure de puissance (25) à l'intérieur de la fenêtre de temps prédéterminée (5).

5. Procédé selon l'une des revendications 1 à 4, **caractérisé en ce que** les valeurs de mesure et/ou les positions du compteur sont évaluées dans le générateur de signaux (11) et sont représentées sur un écran.

6. Procédé selon l'une des revendications 1 à 5, **caractérisé en ce qu'**un nombre de mesures pour une séquence de mesure est variable.

7. Procédé selon la revendication 6, **caractérisé en ce que**, avant une séquence de mesure, est mesurée une puissance de crête ou une tension de crête maximale d'impulsion des signaux reçus et détectés (32) sur le dispositif de mesure de la puissance (25), et est ajustée une valeur seuil pour produire un signal de déclenchement (33) dans le dispositif de mesure de la puissance (25).

8. Procédé selon l'une des revendications 1 à 7, **caractérisé en ce que** le signal découplé par le premier coupleur directif (19) en direction du générateur de signaux (11) à partir du trajet de signal antenne-transpondeur est affaibli par un élément d'atténuation (14) et est retransmis à la sortie du générateur de signaux (12).

9. Procédé selon l'une des revendications 1 à 8, **caractérisé en ce que** avant une séquence de mesure, des temps de parcours internes sont déterminés par le générateur de signaux (11), les câbles (13, 16, 18, 26), le premier et/ou le deuxième coupleur directif (19, 20) et/ou le dispositif de mesure de puissance (25) et sont pris en compte lors d'un calcul de paramètres du signal et/ou **en ce que**, avant une séquence de mesure, une première atténuation est mesurée par l'élément d'atténuation (14) et le premier élément de couplage (19) dans le dispositif de mesure de la puissance (25) et est prise en compte lors du calcul des paramètres du signal et/ou **en ce que**, avant une séquence de mesure, une deuxième atténuation du premier et deuxième coupleur directif (19, 20, 20') ainsi que le facteur de réflexion d'antenne dans le dispositif de mesure de la puissance (25) sont mesurés et sont pris en compte lors du calcul des paramètres du signal.

10. Système de test pour tester un transpondeur DME ou TACAN (17) pour recevoir et émettre des signaux dans un service de radionavigation aérienne avec une antenne (22) y étant raccordée, comprenant
- un générateur de signaux (11) pour produire des signaux de demande (30) et pour recevoir et évaluer des signaux de réponse, qui sont produits par le transpondeur (17) en réaction au signal de demande reçu (6), le signal de demande (6) et le signal de réponse (2) étant conçus comme impulsion double,
- un premier et un deuxième coupleur directif (19, 20), qui sont disposés dans le trajet de signal entre le transpondeur (17) et l'antenne (22), un premier raccordement (15) du premier coupleur directif (19) étant relié à la sortie du générateur de signaux (12) et un premier raccordement (24, 24') du deuxième coupleur directif (20) étant relié à une entrée d'un dispositif de mesure de puissance (25) pour mesurer une puissance de signal ou une tension de signal,
**caractérisé en ce que** le générateur de signaux est disposé pour évaluer uniquement des signaux de réponse (2) qui arrivent dans une fenêtre de temps (5) fixée au niveau de la durée, dont la position est fixée par un temps de retard (3) du signal de réponse, déterminé par le système, et **en ce que** le premier coupleur directif (19) couple une partie amortie du signal de demande dans le trajet de signal antenne-transpondeur et le deuxième coupleur directif (20, 20') découple une partie amortie du signal de réponse provenant du trajet de signal antenne-transpondeur.

11. Système de test selon la revendication 10, **caractérisé en ce qu'**un signal de déclenchement (33) peut être produit dès qu'une puissance ou une tension mesurée dépasse une valeur seuil.

12. Système de test selon l'une des revendications 10 et 11, **caractérisé en ce que** le dispositif de mesure de la puissance (25) est un capteur de puissance, qui est relié au générateur de signaux (11) et retransmet la puissance et/ou la tension mesurée d'un signal (32) au générateur de signaux (11).

13. Système de test selon l'une des revendications 10 à 12, **caractérisé en ce que** le générateur de signaux (11) comprend au moins un premier compteur pour compter tous les signaux de demande envoyés (30) ainsi qu'un deuxième compteur pour compter tous les signaux de réponse reçus (32).

14. Système de test selon la revendication 10 à 13, **caractérisé en ce que** les premier et deuxième coupleurs réactifs (19, 20) sont réalisés comme un coupleur directif double.

15. Système de test selon l'une des revendications 10 à 14, **caractérisé en ce qu'**un atténuateur (14) est disposé entre le générateur de signaux (11) et le premier coupleur directif (19) pour atténuer les signaux de réponse, qui sont découplés du premier coupleur directif (19) dans le sens inverse à partir du trajet de signal antenne-transpondeur (16, 21, 23).
